# EUROPÄISCHE PATENTANMELDUNG

(11) **EP 1 641 181 A1**
(43) Veröffentlichungstag der Anmeldung: **29.03.2006**
(21) Anmeldenummer: 05107306.2
(22) Anmeldetag: 09.08.2005
(51) Int. Cl.: H04L 12/28

(54) **Verfahren zur Datenübermittlung und danach arbeitende Kommunikationseinrichtung**

(30) Priorität: 23.09.2004 DE 102004046185
(71) Anmelder: SIEMENS AKTIENGESELLSCHAFT, 80333 München (DE)
(72) Erfinder: Abraham-Fuchs, Klaus, 91058 Erlangen (DE)

(57) **Zusammenfassung**

Bei einem Verfahren zur Datenübermittlung an eine Informationsanzeige (6), bei dem einer Benutzerperson aus einer Datengesamtmenge (26) von Gerätedaten (12) eine Datenteilmenge (22) zur Anzeige gebracht wird, wird die Datenteilmenge (22) nach einer Konfiguration an der Informationsanzeige (6) zentral ermittelt. Bei einer entsprechenden Kommunikationseinrichtung (1) ist die Informationsanzeige (6) zur Darstellung der Gerätedaten (12) mit einer Zentralrechnereinheit (2) zur Bestimmung der Datenteilmenge (22) aus der Datengesamtmenge (26) der Gerätedaten (12) mindestens eines Endgerätes (4) gekoppelt, das zur Bereitstellung der Gerätedaten (12) eingangsseitig mit der Zentralrechnereinheit (2) verbunden ist.

## Beschreibung

Die Erfindung betrifft ein Verfahren zur Datenübermittlung an eine Informationsanzeige. Sie bezieht sich weiter auf eine nach diesem Verfahren arbeitende Kommunikationseinrichtung.

Eine derartige Kommunikationseinrichtung wird im Bereich der sogenannten "Smart Home"-Technologie verwendet und dient dazu, Haushalts- und Entertainment-Geräte zu vernetzen und über das Netzwerk fernzusteuern. Dazu ist es erforderlich, einem Benutzer Informationen zum Steuern, Bedienen und Warten der entsprechenden Geräte zum richtigen Zeitpunkt und am richtigen Ort bereitzustellen sowie diese zusätzlich in übersichtlicher Form darzustellen.

Eine Möglichkeit zur Beschaffung derartiger Informationen für den Benutzer besteht in der Benutzung von die Funktionen der Geräte beschreibenden Anleitungen. Die Bereithaltung einer hierbei üblichen Vielzahl von Anleitungen für eine entsprechende Anzahl von Geräten ist für den Benutzer aufwendig und daher unerwünscht. Da zudem der Benutzer einerseits in der Regel keine der Anleitungen mit sich führt und andererseits von jedem Gerät häufig nur vergleichsweise wenige Funktionen kennt, ist ihm vor Ort häufig ein funktionell nur beschränkter Gebrauch des Gerätes möglich.

Der Erfindung liegt die Aufgabe zugrunde, ein Verfahren zur Informationsbeschaffung für im Haushalts- und Arbeitsumfeld vorhandene Geräte und eine nach dem Verfahren arbeitende Kommunikationseinrichtung anzugeben.

Bezüglich des Verfahrens wird die genannte Aufgabe erfindungsgemäß gelöst durch die Merkmale des Anspruchs 1. Das Verfahren umfasst dabei eine Datenübermittlung an eine Informationsanzeige, um einer Benutzerperson aus einer Datengesamtmenge von Gerätedaten eine Datenteilmenge anzuzeigen, die nach einer Konfiguration der Informationsanzeige zentral ermittelt wird. Insbesondere erfolgt die Konfiguration an der Informationsanzeige selbst, z.B. über ein Touchpad, oder unabhängig hiervon mittels eines Mobiltelefons (Handy) bzw. über eine separate Tastatur.

Vorteilhafte Weiterbildungen des Verfahrens sind Gegenstand der auf den Anspruch 1 rückbezogenen Unteransprüche.

Bezüglich der Kommunikationseinrichtung wird die genannte Aufgabe erfindungsgemäße gelöst durch die Merkmale des Anspruchs 13. So umfasst die Kommunikationseinrichtung zur Darstellung von Gerätedaten mindestens eine Informationsanzeige, die mit einer Zentralrecheneinheit zur Bestimmung der Datenteilmenge aus der Datengesamtmenge der Gerätedaten mindestens eines Endgerätes gekoppelt ist. Zur Bereitstellung der Gerätedaten ist dabei das Endgerät eingangsseitig mit der Zentralrecheneinheit verbunden.

In zweckmäßiger Ausgestaltung ist an der Informationsanzeige eine Eingabeeinrichtung vorgesehen, über die der Benutzer zur Festlegung der Datenteilmenge ein Anzeigeprofil angeben kann. Dabei sind an der Informationsanzeige bestimmte Anzeigeoptionen vorgegeben, aus denen die Benutzerperson zur Erstellung der Datenteilmenge auswählen kann. Auch kann die Eingabe des Anzeigeprofils und/oder die Auswahl der Anzeigeoptionen beispielsweise durch Sprachsteuerung über eine als Mikrofon oder durch direkte Eingabe über eine als Tastatur ausgeführte Eingabeeinrichtung erfolgen. Das an der Informationsanzeige erstellte Anzeigeprofil wird der Zentralrecheneinheit zugeführt und in dieser gespeichert.

Gemäß einer vorteilhaften Ausgestaltung ist an der Informationsanzeige eine Identifikationseinrichtung vorgesehen. Diese dient zur Erkennung des die Informationsanzeige bedienenden Benutzers. Die Informationsanzeige führt der Zentralrecheneinheit ein Signal zur Aktivierung desjenigen Anzeigeprofils zu, das dem über die Identifikationseinrichtung an der Informationsanzeige erkannten Benutzer entspricht. Infolge der Aktivierung des sogenannten benutzerspezifischen Anzeigeprofils entnimmt die Zentralrecheneinheit der Datengesamtmenge die erforderlichen Gerätdaten und stellt diese zu einer benutzerspezifischen Datenteilmenge zusammen. Diese wird derjenigen Informationsanzeige zugeführt, an der sich der Benutzer befindet.

In weiterer zweckmäßiger Ausgestaltung ist an der Informationsanzeige eine Einrichtung zur Gerätebezeichnung vorgesehen. Diese dient dazu, der Informationsanzeige ein Identifikationsmerkmal, beispielsweise eine Identifikationsnummer, zuzuweisen. In der Zentralrecheneinheit wird ein informationsspezifisches Anzeigeprofil entsprechend dem die Informationsanzeige kennzeichnenden Identifikationsmerkmals aktiviert. Die Zentralrecheneinheit erstellt anhand des informationsspezifischen Anzeigeprofils eine anzeigenspezifische Datenteilmenge mit Gerätedaten und führt die Datenteilmenge der Informationsanzeige zu.

Nach einer besonders bevorzugten Variante ist an der Informationsanzeige eine Zeitvorgabeeinrichtung vorgesehen, die beispielsweise als Zeituhr ausgeführt ist. Kommunizieren mehrere Informationsanzeigen mit der Zentralrecheneinheit, so ist es zweckmäßig, die Zeitvorgabeeinrichtung - anstelle einer Integration in den einzelnen Informationsanzeigen - in der Zentralrecheneinheit zu integrieren. Mit Hilfe dieser Zeitvorgabeeinrichtung ist es möglich, Datenteilmengen mit verschiedenen Gerätedaten zu unterschiedlichen Zeitabschnitten an der Informationsanzeige zur Anzeige zu bringen. Dies dient also dazu, dem Benutzer zu bestimmten Zeiten andere Gerätedaten als zu anderen Zeiten an der Informationsanzeige bereitzustellen. Dazu wird in der Zentralrecheneinheit anhand der Zeitvorgabeeinrichtung ein zeitintervallspezifisches Anzeigeprofil aktiviert. Die Aktivierung erfolgt beispielsweise durch ein von der Zeitvorgabeeinrichtung bei Durchschreiten einer Zeitabschnittsgrenze abgegebenes Signal. Anhand des zeitintervallspezifischen Anzeigeprofils erstellt die Zentralrecheneinheit eine zeitintervallspezifische Datenteilmenge mit dafür vorgesehenen Gerätedaten und führt diese der Informationsanzeige zu.

Ferner ist die Kommunikationseinrichtung vorzugsweise mit einer Einrichtung zur Positionsbestimmung versehen, die eine Positionsbestimmung einzelner Informationsanzeigen erlaubt. Dazu kann die Informationsanzeige mit einem als Lese- und Schreibeinheit ausgeführten Reader versehen. Der Reader kommuniziert mit einem Transponder, der an einem geeigneten Ort, beispielsweise in einem Raum mit mehreren Endgeräten, und/oder an einem Endgerät direkt angebracht ist. Zur Positionsbestimmung der Informationsanzeige kommuniziert der von dieser mit elektrischer Energie versorgte Reader mit dem Transponder, der in einfacher Weise als passives Bauteil ausgeführt sein kann.

Befindet sich die Informationsanzeige mit dem Reader in ausreichender Reichweite zu einem Transponder, so sendet der mit dem Reader lose gekoppelte Transponder ein Signal über dessen Position an den Reader. Dieses Signal wird über die Informationsanzeige zweckmäßigerweise an die Zentralrecheneinheit weitergeleitet. Daraufhin ordnet die Zentralrecheneinheit diejenige Informationsanzeige einem bestimmten Interaktionsbereich zu, von der die Zentralrecheneinheit das Signal erhalten hat. Die Zuordnung der Informationsanzeige an den bestimmten Interaktionsbereich ist abhängig von dem Positionssignal des Transponders, der im Voraus diesem Interaktionsbereich zugewiesen worden ist. Beispielsweise sind die Transponder, die sich in demselben Raum befinden, demjenigen Interaktionsbereich zugewiesen, dem die Informationsanzeige für den Fall zugeordnet wird, dass sie sich genau in diesem Raum befindet.

Darauf folgend wird in der Zentralrecheneinheit ein für den Interaktionsbereich vorgegebenes, ortsspezifisches Anzeigeprofil aktiviert. Anhand dieses Anzeigeprofils entnimmt die Zentralrecheneinheit wiederum Gerätedaten aus der Datengesamtmenge und stellt die entnommenen Gerätedaten zu einer ortsspezifischen Datenteilmenge zusammen. Die ortsspezifische Datenteilmenge wird der betreffenden Informationsanzeige zur Anzeige der darin enthaltenen Gerätdaten zugeführt.

In zweckmäßiger Weiterbildung sind an der Zentralrecheneinheit sowie an der Informationsanzeige eine Sende-Empfangs-Einrichtung vorgesehen. Die Sende-Empfangs-Einrichtung dient einer drahtlosen Kommunikation zwischen der Zentralrecheneinheit und der Informationsanzeige. Dadurch ist vorteilhafterweise auch eine Standortversetzung der Kommunikationseinrichtung möglich. Außerdem wirkt sich eine drahtlose Kommunikation zwischen der Zentralrecheneinheit und der Informationsanzeige auch dahingehend besonders Kosten sparend aus, dass zusätzlich zu den Kabeln zur elektrischen Energieversorgung keine weiteren Kabel für die Datenübermittlung erforderlich sind. Zur drahtlosen Übertragung der Gerätedaten von den einzelnen Endgeräten an die Zentralrecheneinheit und eines möglichen Datenaustauschs mit der Zentralrecheneinheit zur Steuerung der Endgeräte sind diese ebenfalls mit Sende-Empfangs-Einrichtungen versehen. Demnach ist die Kommunikationseinrichtung standortunabhängig und besonders unproblematisch von einem Standort zum anderen versetzbar.

Gemäß einer vorteilhaften Ausgestaltung sind die Gerätedaten der mit der Zentralrecheneinheit kommunizierenden Endgeräte in einem in der Zentralrecheneinheit vorgesehenen Gerätedatenspeicher hinterlegt. Diese Ausgestaltung dient einer besonders zeitsparenden Zusammenstellung der Datenteilmenge aus der im Gerätedatenspeicher hinterlegten Datengesamtmenge anhand des Anzeigeprofils.

Des Weiteren ist es zweckmäßig, auch die Anzeigeprofile in einem in der Zentralrecheneinheit vorgesehenen Profilspeicher zu hinterlegen. Für einen besonders zeitsparenden Datenzugriff ist der Profilspeicher mit dem Gerätedatenspeicher gekoppelt.

Die mit der Erfindung erzielten Vorteile bestehen insbesondere darin, dass die Konfiguration der einzelnen für die Kommunikationseinrichtung vorgesehenen Anzeigeprofile zur Zusammenstellung der Gerätedaten zu einzelnen Datenteilmengen über die Eingabeeinrichtung an der Informationsanzeige erfolgen kann. Sind an der Kommunikationseinrichtung mehrere Informationsanzeigen vorgesehen, so kann ein Benutzer an jeder Informationsanzeige durch die vorhandene Identifikationseinrichtung ein für die Benutzer vorgesehenes Szenario mit Gerätedaten abrufen. Durch die Identifikationseinrichtung erfolgt die Zuführung der benutzerspezifischen Datenteilmenge automatisch an diejenige Informationsanzeige, die vom Benutzer bedient wird.

Ferner ist es mit dem zeitintervallspezifischen Anzeigeprofil möglich, an einer Informationsanzeige zu unterschiedlichen Zeitabschnitten, beispielsweise zu unterschiedlichen Tageszeiten, zwischen verschiedenen Datenteilmengen zu variieren.

Zudem kann die Darstellung der Gerätedaten an der Informationsanzeige optisch oder auch akustisch erfolgen. Dazu ist die Informationsanzeige beispielsweise mit einem Monitor bzw. einem Lautsprecher versehen. Zur Konfiguration eines Anzeigeprofils oder mehrerer Anzeigeprofile durch einen Benutzer ist die Informationsanzeige weiterhin vorzugsweise derart ausgeführt, dass die Eingabeeinrichtung als Touchpad in den Bildschirm integriert ist und dieser demnach als Tochscreen arbeitet.

Außerdem ist durch die Positionsbestimmbarkeit der Informationsanzeige die Möglichkeit gegeben, die Informationsanzeige an unterschiedlichen Orten sowie in unmittelbarer Umgebung unterschiedlicher Endgeräte zu betreiben und dabei stets die Gerätedaten für dasjenige Endgerät zu erhalten, das sich in unmittelbaren Umgebung zur Informationsanzeige befindet.

Des Weiteren wird durch das Zweispeichersystem in der Zentralrecheneinheit mit dem Profilspeicher und dem Gerätedatenspeicher eine besonders zeitsparende Zusammenstellung der für die Informationsanzeige erforderlichen Gerätedaten erreicht.

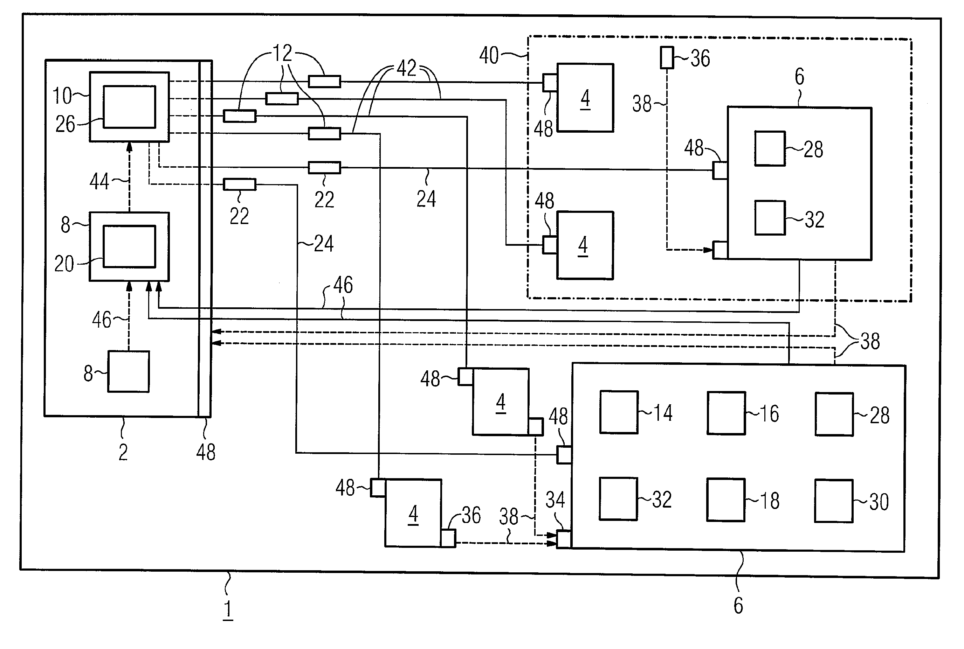

Nachfolgend wird ein Ausführungsbeispiel der Erfindung anhand einer Zeichnung näher erläutert. Darin zeigt die Figur ein Blockschaltbild der erfindungsgemäßen Kommunikationseinrichtung.

Die Kommunikationseinrichtung 1 umfasst eine Zentralrecheneinheit 2, ein oder mehrere mit der Zentralrecheneinheit 2 kommunizierende Endgeräte 4 und mindestens eine Informationsanzeige 6. Die Zentralrecheneinheit 2 umfasst weiterhin zwei Speicher, nämlich einen Profilspeicher 8 und einen Gerätedatenspeicher 10. Die Informationsanzeige 6 ist vorzugsweise als optische und/oder akustische Anzeige ausgeführt.

Die Kommunikationseinrichtung 1 stellt Gerätedaten 12 der Endgeräte 4 an der Informationsanzeige 6 dar. Umfassen die Gerätedaten 12 Informationen, wie Zustands- oder Messdaten der Endgeräte 4, werden diese Informationen optisch durch einen Monitor 14 an der Informationsanzeige 6 dargestellt. Sind die Gerätedaten 12 beispielsweise Warn- oder Alarmsignale, werden diese bevorzugt über einen an der Informationsanzeige 6 vorgesehenen Lautsprecher 16 akustisch ausgegeben.

Des Weiteren umfasst die Kommunikationseinrichtung 1 eine an der Informationsanzeige 6 vorgesehene Eingabeeinrichtung 18, über die eine Benutzerperson ein Anzeigeprofil 20 angeben kann. Das Anzeigeprofil 20 umfasst dabei Einzelheiten zur Festlegung einer Gerätedaten 12 umfassenden Datenteilmenge 22, die von der Zentralrecheneinheit 2 zur Anzeige an die Informationsanzeige 6 übersandt wird.

Das von der Benutzerperson erstellte Anzeigeprofil 20 wird über eine Datenverbindung 24 der Zentralrecheneinheit 2 zugeführt und von dieser abgespeichert. Die Eingabe durch die Benutzerperson kann direkt durch die als Tastatur ausgeführte Eingabeeinrichtung 18 erfolgen. Alternativ erfolgt die Eingabe sprachgesteuert über eine als Mikrofon ausgeführte Eingabeeinrichtung 18. Zweckmäßigerweise ist der die Gerätedaten 12 der Datenteilmenge 22 anzeigende Monitor 14 mit einem Touch-Pad versehen und somit als Touch-Screen ausgeführt, der eine zusätzliche Eingabeeinrichtung ersetzt.

Des Weiteren dient die Eingabevorrichtung 18, die auch als an der Informationsanzeige 6 vorgesehenes Tasten-Keyboard ausgeführt sein kann, und/oder das Touch Screen 14 der Benutzerperson zur Eingabe einer gewünschten Zusammenstellung für die Datenteilmenge 22 aus einer Datengesamtmenge 26. Die Eingabe durch die Benutzerperson kann alternativ über das Mikrofon 16 sprachgesteuert erfolgen. Im Gegensatz zur benutzer- oder personenspezifischen, im Voraus festgelegten Datenteilmenge 22, die der Informationsanzeige 6 durch Identifikation der Benutzerperson zugeführt wird und als vorgegebenes Szenario für die jeweilige Benutzerperson anzusehen ist, beruht die benutzerspezifisch zusammengestellte Datenteilmenge 22 auf einer Eingabe der Benutzerperson zur Auswahl gewünschter Gerätedaten 12 aus der Datengesamtmenge 26.

Um an der Informationsanzeige 6 eine Datenteilmenge 22 aus einer Datengesamtmenge 26 der Gerätedaten 12 zeitabhängig zur Anzeige zu bringen, also eine zeitintervallspezifische Dateneilmenge 22 darzustellen, umfasst die Zentralrecheneinheit 2 eine Zeitvorgabeeinrichtung 28, die zweckmäßigerweise als Zeituhr ausgeführt ist.

Um der Informationsanzeige 6 eine für eine Benutzerperson im Voraus festgelegte benutzerspezifische Datenteilmenge 22 zur Verfügung zu stellen, weist die Informationsanzeige 6 eine Identifikationseinrichtung 30 zur Erkennung der Benutzerperson auf. Die Identifikationseinrichtung 30 ist vorzugsweise als Mikrofon ausgeführt, um die Benutzerperson durch Spracherkennung zu identifizieren. Alternativ ist die Identifikationseinrichtung 30 als Touch-Pad zur Identifizierung der Benutzerperson über deren Fingerabdruck ausgeführt. Als weitere Alternative zur Identifikation der Benutzerperson kann diese durch Eingabe eines benutzerpersonenspezifischen PIN-Codes über die an der Informationsanzeige 6 vorgesehene Eingabevorrichtung 18 durchgeführt werden.

Umfasst die Kommunikationseinrichtung 1 mehrere Informationsanzeigen 6, ist an jeder einzelnen Informationsanzeige 6 zweckmäßigerweise eine Einrichtung 32 zur Gerätebezeichnung vorgesehen, die für die jeweilige Informationsanzeige 6 ein Identifikationsmerkmal festlegt. Damit ist es möglich, einer Informationsanzeige 6 eine für diese vorgesehene informationsspezifische Datenteilmenge 22 anhand des Identifikationsmerkmals der jeweiligen Informationsanzeige 6 zuzuweisen.

Um an der Informationsanzeige 6 Gerätedaten 12 von Endgeräten 4, die sich in unmittelbarer Nähe der Informationsanzeige 6 befinden, zur Anzeige zu bringen, ist an der Informationsanzeige 6 eine Einrichtung zu deren Positionsbestimmung vorgesehen. Die Positionsbestimmung beruht auf dem Transformatorprinzip. Demnach umfasst die Einrichtung zur Positionsbestimmung einen Reader 34, der an der Informationsanzeige 6 angebracht ist und als Schreib- und Lesestation dient, sowie einen Transponder 36, der als Transmitter und Responder dient. Der Reader 34 kommuniziert mit dem Transponder 36, der an einem geeigneten Ort, beispielsweise in einem Raum mit mehreren Endgeräten 4, und/oder an einem Endgerät 4 direkt angebracht ist. Zur Positionsbestimmung der Informationsanzeige 6 kommuniziert der von dieser mit elektrischer Energie versorgte Reader 34 mit dem Transponder 36, der als passives Bauteil ausgeführt ist.

Befindet sich die Informationsanzeige 6 mit dem Reader 34 in ausreichender Reichweite zu einem Transponder 36, so sendet der mit dem Reader 34 lose gekoppelte Transponder 36 ein Positionssignal 38 über dessen Position an den Reader 34. Das Positionssignal 38 wird über die Informationsanzeige 6 zweckmäßigerweise an die Zentralrecheneinheit 2 weitergeleitet. Daraufhin ordnet die Zentralrecheneinheit 2 diejenige Informationsanzeige 6, von der die Zentralrecheneinheit 2 das Positionssignal 38 erhalten hat, einem bestimmten Interaktionsbereich 40 zu. Die Zuordnung der Informationsanzeige 6 an den Interaktionsbereich 40 ist abhängig von dem Positionssignal 38 des Transponders 36, der im Voraus diesem Interaktionsbereich 40 zugewiesen worden ist. Beispielsweise sind die Transponder 36, die sich in demselben Raum befinden, demjenigen Interaktionsbereich 40 zugewiesen, dem die Informationsanzeige 6 für den Fall zugeordnet wird, dass sie sich genau in diesem Raum befindet.

Zur Zusammenstellung der Datenteilmenge 22 für die Informationsanzeige 6 ist im Profilspeicher 8 der Zentralrecheneinheit 2 ein den Umfang und die Details der Datenteilmenge 22 beschreibendes Anzeigeprofil 20 hinterlegt. In Abhängigkeit des Anzeigeprofils 20 entnimmt die Zentralrecheneinheit 2 die für die Datenteilmenge 22 bestimmten Gerätedaten 12 aus der im Gerätedatenspeicher 10 hinterlegten Datengesamtmenge 26. Für einen besonders schnellen Zugriff auf die Gerätedaten 12 der Datengesamtmenge 26 sind die Gerätedaten 12 denjenigen Endgeräte 4 im Gerätedatenspeicher 10 hinterlegt, mit denen die Zentralrecheneinheit 2 in der Kommunikationseinrichtung 1 kommuniziert.

Zweckmäßigerweise erfolgt die Übermittlung der Gerätedaten 12 von den Endgeräten 4 an die Zentralrecheneinheit 2 mittels drahtloser Kommunikation über Datensignale 42. Zur Entnahme von für eine Datenteilmenge 22 vorgesehenen Gerätedaten 12 aus dem Gerätedatenspeicher 10 ist dieser mit dem Profilspeicher 8 über eine Kommunikationsverbindung 44 gekoppelt. Über diese ordert die Zentralrecheneinheit 2 anhand des im Profilspeicher 8 hinterlegten Anzeigeprofils 20 bestimmte Gerätedaten 12 aus dem Gerätedatenspeicher 10 zu.

Sind von der Benutzerperson erstellte Anzeigeprofile 20 mit Gerätedaten 12 umfassenden Datenteilmengen 22 im Profilspeicher 8 hinterlegt, so können die Anzeigeprofile 20 zur Erstellung von Datenteilmengen 22 aktiviert werden. Die Aktivierung erfolgt über ein Aktivierungssignal 46, das von der Informationsanzeige 6 an die Zentralrecheneinheit 2 gesandt wird. Dieses Aktivierungssignal 46 kann zum einen auf einer Positionsbestimmung der Informationsanzeige 6 beruhen und ein diesbezügliches ortsspezifisches Anzeigeprofil 20 aktivieren. Demnach wird der Informationsanzeige 6 eine Datenteilmenge 22 mit Gerätedaten 12 von in unmittelbarer Nähe der Informationsanzeige 6 befindlichen Endgeräten 4 über die Datenverbindung 24 zugeführt.

Alternativ kann über das Aktivierungssignal 46 ein eine Benutzerperson kennzeichnendes, benutzerspezifisches Anzeigeprofil 20 aktiviert werden. Des Weiteren besteht die Möglichkeit, zeitabhängig ein zeitintervallspezifisches Anzeigeprofil 20 zu aktivieren, wodurch der Informationsanzeige 6 für einen im Voraus festgelegten Zeitabschnitt Gerätedaten 12 zur Verfügung gestellt werden. Weiterhin besteht die Möglichkeit der Aktivierung eines informationsanzeigenspezifischen Anzeigeprofils 20. Diese wird aktiviert durch ein von der Gerätebezeichnungseinrichtung 32 erstelltes Identifikationsmerkmal einer Informationsanzeige 6. Infolgedessen werden ein für die jeweilige Informationsanzeige 6 kennzeichnendes informationsanzeigenspezifisches Anzeigeprofil 20 abgerufen und Gerätedaten 2, die anhand des informationsanzeigenspezifischen Anzeigeprofils 20 ausgewählt werden, an die Informationsanzeige 6 übermittelt.

Um die Kommunikationseinrichtung 1 flexibel und standortunabhängig zu gestalten, erfolgt die Kommunikation zwischen der Zentralrecheneinheit 2 und den Informationsanzeigen 6 sowie zwischen der Zentralrecheneinheit 2 und den Endgeräten 4 drahtlos. Dazu ist an der Informationsanzeige 6 und an der Zentralrecheneinheit 2 sowie am jeweiligen Endgerät 4 jeweils eine Sende-Empfangs-Einrichtung 48 vorgesehen.

## Patentansprüche

1. Verfahren zur Datenübermittlung an eine Informationsanzeige (6), bei dem einer Benutzerperson aus einer Datengesamtmenge (26) von Gerätedaten (12) eine Datenteilmenge (22) zur Anzeige gebracht wird, wobei die Datenteilmenge (22) nach einer Konfiguration der Informationsanzeige (6) zentral ermittelt wird.

2. Verfahren nach Anspruch 1, bei dem zur Festlegung der Datenteilmenge (22) ein Anzeigeprofil (20) durch benutzerspezifische Eingabe von mindestens einer Anzeigeoption an der Informationsanzeige (6) erstellt und einer Zentralrecheneinheit (2) eingangsseitig zugeführt wird.

3. Verfahren nach Anspruch 1 oder 2, bei dem zur Festlegung der Datenteilmenge (22) mit an der Informationsanzeige (6) dargestellten Gerätedaten (12) ein vorgegebenes, benutzerspezifisches Anzeigeprofil (20) aktiviert wird.

4. Verfahren nach Anspruch 1 oder 2, bei dem zur Festlegung der Datenteilmenge (22) mit an der Informationsanzeige (6) dargestellten Gerätedaten (12) ein vorgegebenes, informationsspezifisches Anzeigeprofil (20) aktiviert wird.

5. Verfahren nach Anspruch 1 oder 2, bei dem zur Festlegung der Datenteilmenge (22) mit an der Informationsanzeige (6) dargestellten Gerätedaten (12) ein für ein bestimmtes Zeitintervall vorgegebenes, zeitintervallspezifisches Anzeigeprofil (20) aktiviert wird.

6. Verfahren nach Anspruch 1 oder 2, bei dem mittels der Informationsanzeige (6) nach einem Transformatorprinzip eine Positionsbestimmung durchgeführt und der Zentralrecheneinheit (2) eingangsseitig ein Positionssignal (38) über die mittels der Positionsbestimmung errechnete Position der Informationsanzeige (6) zugeführt wird.

7. Verfahren nach Anspruch 6, bei dem der Informationsanzeige (6) ein deren Position kennzeichnender Interaktionsbereich (40) von der Zentralrecheneinheit (2) zugeordnet wird.

8. Verfahren nach Anspruch 7, bei dem anhand des Interaktionsbereiches (40) zur Festlegung der Datenteilmenge (22) mit an der Informationsanzeige (6) dargestellten Gerätedaten (12) ein vorgegebenes, ortsspezifisches Anzeigeprofil (20) aktiviert wird.

9. Verfahren nach einem der Ansprüche 2 bis 8, bei dem die Zentralrecheneinheit (2) die Datenteilmenge (22) in Abhängigkeit des jeweiligen Anzeigeprofils (20) aus der Datengesamtmenge (26) bestimmt und die Datenteilmenge (22) der Informationsanzeige (6) zuführt.

10. Verfahren nach einem der Ansprüche 2 bis 9, bei dem die Informationsanzeige (6) zum Datenaustausch mit der Zentralrecheneinheit (2) drahtlos kommuniziert.

11. Verfahren nach einem der Ansprüche 1 bis 10, bei dem die Gerätedaten (12) zentral gespeichert werden.

12. Verfahren nach einem der Ansprüche 2 bis 11, bei dem die Übermittlung von Gerätedaten (12) an die Zentralrecheneinheit (2) drahtlos erfolgt.

13. Kommunikationseinrichtung mit mindestens einer Informationsanzeige (6) zur Darstellung von Gerätedaten (12), die mit einer Zentralrecheneinheit (2) zur Bestimmung einer Datenteilmenge (22) aus einer Datengesamtmenge (26) der Gerätedaten (12) mindestens eines Endgerätes (4) gekoppelt ist, das zur Bereitstellung der Gerätedaten (12) eingangsseitig mit der Zentralrecheneinheit (2) verbunden ist.

14. Kommunikationseinrichtung nach Anspruch 13, bei der an der Informationsanzeige (6) zur Erstellung eines Anzeigeprofils (20) eine Eingabeeinrichtung (30) vorgesehen ist.

15. Kommunikationseinrichtung nach Anspruch 13 oder 14, bei der an der Informationsanzeige (6) zur Aktivierung eines vorgegebenen benutzerspezifischen Anzeigeprofils (20) eine den Benutzer der Informationsanzeige (6) erkennende Identifikationseinrichtung (16) vorgesehen ist.

16. Kommunikationseinrichtung nach einem der Ansprüche 13 bis 15, bei der an der Informationsanzeige (6) zur Aktivierung eines vorgegebenen informationsspezifischen Anzeigeprofils (20) eine Einrichtung (32) zur Gerätebezeichnung für eine Erstellung eines die Informationsanzeige (6) kennzeichnenden Identifikationsmerkmals vorgesehen ist.

17. Kommunikationseinrichtung nach einem der Ansprüche 13 bis 16, bei der an der Informationsanzeige (6) und/oder an der Zentralrecheneinheit (2) eine Zeitvorgabeeinrichtung (28) zur Aktivierung eines vorgegebenen zeitintervallspezifischen Anzeigeprofils (20) für mindestens ein Zeitintervall vorgesehen ist.

18. Kommunikationseinrichtung nach einem der Ansprüche 13 bis 17, bei der die Informationsanzeige (6) einen Reader (34) aufweist, der mit mindestens einem an einem vorgegebenen Ort und/oder vorgegebenem Endgerät (4) angebrachten Transponder (36) zur Positionsbestimmung der Informationsanzeige (6) koppelbar ist.

19. Kommunikationseinrichtung nach Anspruch 18, bei der die Informationsanzeige (6) zur Aktivierung eines vorgegebenen ortsspezifischen Anzeigeprofils (20) einem Interaktionsbereich (40) des Transponders (36) zugeordnet ist.

20. Kommunikationseinrichtung nach einem der Ansprüche 14 bis 19, bei der das zur Bestimmung der Datenteilmenge (22) aus der Datengesamtmenge (26) aktivierte Anzeigeprofil (20) in einem in der Zentralrecheneinheit (2) vorgesehenen Profilspeicher (8) hinterlegt ist.

21. Kommunikationseinrichtung nach einem der Ansprüche 13 bis 20, bei der die Gerätedaten (12) in einem Gerätedatenspeicher (16) der Zentralrecheneinheit (2) hinterlegt sind.

22. Kommunikationseinrichtung nach Anspruch 2, bei der der Profilspeicher (16) zur Zusammenstellung der Datenteilmenge (22) aus der Datengesamtmenge (26) der Gerätedaten (12) mit dem Gerätedatenspeicher (16) gekoppelt ist.

23. Kommunikationseinrichtung nach einem der Ansprüche 13 bis 22, bei der zur drahtlosen Datenübermittlung an der Informationsanzeige (6) und an der Zentralrecheneinheit (2) sowie am Endgerät (4) eine Sende-Empfangs-Einrichtung (48) vorgesehen ist.
